# EUROPÄISCHE PATENTSCHRIFT

(11) **EP 0 759 351 B1**
(45) Veröffentlichungstag und Bekanntmachung des Hinweises auf die Patenterteilung: **31.03.1999**
(21) Anmeldenummer: 96111583.9
(22) Anmeldetag: 18.07.1996
(51) Int. Cl.: B29C 47/58, B29C 47/04

(54) **Verfahren und Vorrichtung zur Herstellung von zwei- oder mehrfarbigen Schalttafelfolien, Armaturenbrettfolien oder daraus hergestellte Armaturenbretter für Kraftfahrzeuge**
Method and apparatus for manufacturing two- or more coloured dashboard foils or dashboards made therefrom
Méthode et appareil pour la production de feuilles de tableau de bord avec deux ou plusieurs couleurs ou tableau de bord fabriqué à partir de telles feuilles

(30) Priorität: 22.08.1995 DE 19530757
(43) Veröffentlichungstag der Anmeldung: 26.02.1997
(73) Patentinhaber: Alkor GmbH Kunststoffe, D-81479 München (DE)
(72) Erfinder: Dous, Eberhardt, Dipl.-Ing., 82237 Wörthsee (DE); Schattauer, Uwe, 80337 München (DE)
(74) Vertreter: Seiler, Siegfried

(56) Entgegenhaltungen:
- EP-A- 0 136 959
- EP-A- 0 636 473
- GB-A- 2 181 987
- US-A- 4 443 397
- PATENT ABSTRACTS OF JAPAN vol. 008, no. 152 (M-309), 14.Juli 1984 & JP-A-59 048137 (TOYODA GOSEI KK), 19.März 1984,
- PATENT ABSTRACTS OF JAPAN vol. 004, no. 029 (M-002), 14.März 1980 & JP-A-55 003985 (DAICEL CHEM IND LTD), 12.Januar 1980,

## Beschreibung

Die vorliegende Erfindung betrifft ein Verfahren und eine Vorrichtung zur Herstellung von zwei- oder mehrfarbigen Folien unter Verwendung mindestens einer Trägerfolie oder Trägerschicht, mindestens einer darauf angeordneten Farbstoffe und/oder Farbpigmente enthaltende Oberfolie oder Oberschicht sowie gegebenenfalls weitere Schichten oder Folien, wobei diese Folien oder Schichten vor dem Austritt aus der Düse durch mindestens einen keilförmigen oder im Querschnitt dreieckförmigen Vorsprung getrennt oder teilweise getrennt sind, jedoch danach nebeneinander und/oder übereinander geführt werden und sich die verschiedenfarbigen Schmelzen der Oberfolie (12) mit der Schmelzschicht der Unterfolie oder Unterschicht vor dem Austritt aus der Extruderdüse vereinigen.

Mittels der vorliegenden Erfindung gelingt es, Schalttafelfolien, Armaturenbrettfolien oder daraus hergestellte Armaturenbretter, bestehend aus mindestens einer Trägerschicht oder Trägerfolie oder-schicht, mindestens einer darauf angeordneten Farbstoffe und/oder Farbpigmente enthaltenden Oberfolie oder Oberschicht sowie gegebenenfalls weiteren Schichten oder Folien, herzustellen, wobei die Oberfolie oder Oberschicht aus mindestens zwei parallel oder annähernd parallel verlaufenden, in der Aufsicht rechteckig- oder parallelogrammförmigen verschiedenartig gefärbten oder pigmentierten Zonen oder Abschnitten besteht und die verschiedenfarbige(n) Oberfolie(n) oder Oberschicht(en) zusammen mit mindestens einer Unterfolie oder Unterschicht durch Coextrusion oder Mehrfachextrusion als Verbundfolie herstellt werden.

Aus EP-A-0475004 ist bereits ein Verfahren zur Herstellung von mehrfarbigen Slushhäuten (Formteile) mit unterschiedlichen Farbbereichen, insbesondere von Armaturentafeln für Kraftfahrzeuge und dergleichen, bekannt, wobei Slush-Material (Pulver oder Paste) in eine die Formgebung der Slush-Haut bestimmende, auf eine Formtemperatur aufheizbare Form eingebracht wird, wobei sich das Slush-Material durch Rotation der Form an der beheizten Formfläche verteilt und ablagert und anschließend sintert und geliert und nach Abkühlung der Form die Slush-Haut durch Entformen aus der Form entnommen wird und wobei für die unterschiedlichen Farbbereiche der Slush-Haut entsprechende unterschiedliche Slush-Materialien für die jeweiligen Farben verwendet werden. Gemäß diesem Verfahren wird in der Rotationssinterform in bestimmten Stufen und Teilen der Rotationsform, die durch Stege unterteilt werden kann, der gefärbte Kunststoff eingebracht und nachfolgend die Rotation der Pulverwanne bzw. -Form durchgeführt. Dieses Verfahren ist auf das Slush-Verfahren oder Pulverrotationssinterverfahren beschränkt und nicht im Extrusionsverfahren durchführbar. Für die Kunststoffe sind Einschränkungen erforderlich, so daß fast ausschließlich PVC zum Einsatz gelangen kann.

Aus der EP-A-0136959 ist bereits eine flache Mehrschichtdüse für die Herstellung von Filmen, Folien oder Platten aus mehrfarbigem Kunststoffmaterial bekannt, in der mehrere Kanäle zur Einspeisung des Kunststoffmaterials angebracht sind. Diese öffnen sich in dem Spalt, der durch die Düsenlippen begrenzt ist und die Dicke des Films oder der Mehrschichtfolie bestimmt. In der Düse ist eine Platte befestigt, wobei der abwärts angebrachte Querrand die Form eines Kammes hat und Zähne enthält, die spitz zulaufen und durch trapezförmige Bereiche begrenzt sind. Die Sektionen beim Austritt verbreitern sich dabei von oben nach unten. Die Düse dient auch zur Herstellung von mehrfarbigen Filmen oder Folien. Der Kamm steht mindestens mit einer anderen Platte in Verbindung, die unterhalb diesem angebracht ist. Die unterschiedlich gefärbten Kunststoffmaterialien werden durch Zuleitungen oder Zuführungsleitungen bis in die Bereiche gebracht und werden dort von den trapezförmigen Bereichen begrenzt. Ein Hahn zur Regulierung des Kunststoffmaterials ist auf jedem Kanal angebracht.

Durch die relativ langen und abgewinkelten Zuführungsleitungen für die unterschiedlich farbigen Kunststoffschmelzen treten unterschiedliche Massendrücke in den einzelnen Rohrleitungen auf. Durch die trapezähnliche Anordnung der kammartigen Vorrichtung im Düsenbereich treten zusätzlich unscharfe Übergänge der farbigen Kunststoffextrudate auf. Die Vorrichtung ist nicht zur Herstellung großer Teile, z. B. Armaturenbretter, geeignet.

Gemäß EP-A-0136959 (D1) wird außer dem vor der Düsenlippe angeordneten Kamm mit Zähnen keine Blackbox oder ein Adapter verwendet.

Gemäß EP-A-0136959 (D1) sind weiterhin die Zähne des Kammes mit ihrer Spitze zur Düsenlippe gerichtet, wobei trapezförmige Felder die Flächen an den Kanten begrenzen und in den unterschiedlichen, zum Teil abgewinkelten Rohrleitungen existieren unterschiedliche Massendrücke bei den einzelnen Extrudatströmen.

Ziel und Aufgabe der vorliegenden Erfindung war es, zwei- oder mehrfarbige Schalttafelfolien oder Armaturenbrettfolien zu finden, die ganz oder teilweise auch unter Verwendung von Extrudern hergestellt werden können und für die nicht nur PVC sondern auch vor allem thermoplastische und/oder thermoelastische Kunststoffe eingesetzt werden können.

Zur Lösung der Aufgabe wurden zahlreiche Versuche durchgeführt. So wurde beispielsweise eine Verbundfolie stellenweise mit einer andersfarbigen Beschichtung versehen, so daß ein Bereich mit farbiger Beschichtung, der andere Bereich mit einer anderen Farbe der Oberfolie gefertigt wurde. Diese Ausführungsform hat den Nachteil, daß sich die Beschichtung dickenmäßig von der Folie abhebt und zusätzlich eine erhöhte Delaminierungsgefahr besteht.

Bei einem Versuch wurden Stege in die Breitschlitzextruderdüse eingebracht. Wurden die Stege in voller Lange gefertigt und unterschiedlich gefärbte Kunststoffe in die jeweiligen Stegbereiche eingeleitet, so stellte man Fehlerstellen bei der Übergangslinie, d. h. im Übergangsbereich der Farben, fest (Bereiche bzw. Linien, an denen sich die unterschiedlich gefärbten Kunststoffolien bzw. Kunststoffschichten treffen). Wurden die Stege andererseits kürzer innerhalb der Breitschlitzextruderdüse gehalten, traten störende Farbmischzonen auf

Erfindungsgemäß wurde festgestellt, daß diesen Zielen und Aufgaben ein Verfahren undeine Vorrichtung zur Herstellung von zwei- oder mehrfarbigen Folien (10) unter Verwendung einer Trägerfolie oder Trägerschicht (11), mit mindestens einer darauf angeordneten Farbstoffe und/oder Farbpigmente enthaltenden Oberfolie oder Oberschicht (12) gerecht wird, wobei die aus zwei oder mehreren Extrudern (1) kommenden Kunststoffschmelzen für diese Folien oder Schichten vor dem Austritt aus der Düse durch mindestens einen keilförmigen oder im Querschnitt dreieckförmigen Vorsprung getrennt oder teilweise getrennt sind, jedoch danach nebeneinander und/oder übereinander geführt werden und sich die verschiedenfarbigen Schmelzen der Oberfolie (12) mit der Schmelzschicht der Unterfolie oder Unterschicht vor dem Austritt aus der Extruderdüse vereinigen. Gemäß der Erfindung werden die Kunststoffschmelzen kontinuierlich einem Adapter oder einer Blackbox (4) mit mindestens einer Öffnung oder einem Spalt für die Trägerfolie oder -schicht (11) und mindestens einer weiteren Öffnung für die Oberfolie oder Oberschicht (12), zugeführt, wobei ein Adapter oder eine Blackbox (4) verwendet wird, in dem bzw. in der der keilförmige Vorsprung (8) oder im Querschnitt dreieckförmige Vorsprung angeordnet ist, wobei die Spitze des keilförmigen Vorsprunges (8) auf den Spalt oder die Spalten für die Unterfolie zeigt, daß mindestens zwei verschiedenfarbige schmelzförmige Kunststoffe für die Oberfolie oder Oberschicht (12), die die gleiche Viskosität oder nahezu gleiche Viskosität, Unterschied der MFI bei 230 °C/2,16 kg von 0 bis 0,5 g/10 min, aufweisen, nach dem Durchtritt durch den Adapter oder die Blackbox (4) ohne Verwendung eines, die beiden Schmelzen trennenden Stege nebeneinander und/oder übereinander geführt werden, daß die Massendrücke der unterschiedlich farbigen Extrudatströme, gemessen bei Austritt aus dem Extruder (1) bzw. Coextruder (2) (3), gleich oder annähernd gleich sind und sich um weniger als 60 bar voneinander unterscheiden, wobei die Massendrücke der unterschiedlichen Extrudatströme jedoch höher als 250 bar liegen und daß die so hergestellten Folien (10) als Schalttafelfolien, Armaturenbrettfolien oder daraus hergestellt Armaturenbretter verwendet werden.

Nach einer bevorzugten Ausführungsform des erfindungsgemäßen Verfahrens werden somit die unterschiedlich Farbstoffgehalte und/oder Farbpigmentgehalte aufweisenden Schmelzen für die Oberfolie oder Oberschicht (12) aus mindestens jeweils einer, zunächst getrennt durch den keilförmigen oder im Querschnitt dreieckförmigen Vorsprung im Adapter, beidseitig neben dem Vorsprung angeordneten Öffnung in den Adapter (bzw. der Blackbox) (4) eingeleitet oder eingeführt und/oder die Schmelze für die Unterfolie(n) (11) wird aus mindestens einer Eintrittsöffnung oder einem Spalt, der unterhalb oder oberhalb der Öffnung(en) für die Oberschicht und unterhalb oder oberhalb des keilförmigen Vorsprunges angeordnet ist, jedoch so, daß die Spitze des keilförmigen Vorsprunges auf den Spalt oder die Spalten für die Unterfolie zeigt, eingeleitet oder eingeführt und wird mit den Schmelzmassenströmen der unterschiedlich gefärbten Oberflächenbereiche und der Unterfolie vereinigt.

Gemäß einer bevorzugten Ausführungsform unterscheiden sich die Massetemperaturen der unterschiedlich farbigen Extrudatströme, gemessen beim Austritt aus dem Extruder um weniger als 30 °C voneinander, wobei die Massetemperatur der unterschiedlich farbigen Extrudatströme, gemessen beim Austritt aus dem Extruder, auf mehr als 190 °C eingestellt ist. Die unterschiedliche Farbstoffgehalte und/oder Farbpigmentgehalte aufweisenden Schmelzen für die Oberfolie oder Oberschicht (12) treten beidseitig neben dem keilförmigen Vorsprung in den Adapter bzw. der Blackbox (4) ein oder die Schmelzen für die Unterfolie(n) treten aus mindestens einer Eintrittsöffnung oder einen Spalt, der untrhalb oder oberhalb der Öffnung für die Oberschicht (12) und unterhalb oder oberhalb des keilförmigen Vorsprunges (8) angeordnet ist, aus und vereinigen sich mit den Schmelzmassenströmen der unterschiedlich gefärbten Oberflächenbereiche und der Unterfolie.

Die aus der Breitschlitzextruderdüse austretende Folie oder schmelzenförmige Folie wird durch entsprechende Auswahl der Farbstoffe und/oder der Farbstoff- oder Farbpigmentkonzentrationen und/oder durch unterschiedlich gefärbte Füllstoffe so eingestellt, daß sie jeweils einen helleren und einem dunkleren Oberflächenbereich aufweisen und/oder die aus dem Extruder austretende Verbundfolie wird nachfolgend einer Weiterverarbeitung oder Behandlung unterworfen.

Nach einer weiteren bevorzugten Ausführungsform werden die aus der Breitschlitzextruderdüse (5) austretenden Folien oder schmelzenförmigen Folien durch die entsprechende Steuerung der zugeführten Schmelzenströme der Oberfolie oder Oberflächenschichten (12) einen breiteren helleren oder mit hellen Farbstoffen und/oder Farbpigmenten gefärbten Oberflächenbereich (Armaturenbereich, Bereich A) und einen kleineren dazu parallel oder annähernd parallel verlaufenden dunkleren oder mit dunkleren Farbstoffen und/oder Farbpigmenten versehenen Oberflächenbereich (an der Frontscheibe angrenzender Bereich, Bereich F) aufgeteilt, so daß die Oberfolie oder Oberflächenschicht diese unterschiedlich gefärbten Bereiche aufweist.

Diese Ausführungsform ist insofern von Bedeutung, da durch immer schräger liegende Frontscheiben der Automobile (niederer CW-Wert) die Gefahr besteht, daß helle Armaturenbretter in der Scheibe spiegeln und die Sicht des Fahrers beeinträchtigen. Andererseits sind oft helle Innenausstattungen im Auto gefragt. Um die Spiegelung in der Frontscheibe zu vermeiden, trotzdem aber eine helle Innenausstattung zu ermöglichen, ist es nach einer bevorzugten Ausführungsform so aufgeteilt, daß der eine Folienbereich (der Oberfolie oder Oberschicht) oder eine Hälfte dunkel, z. B. dunkelgrau, und die andere Hälfte oder der andere Folienbereich hell, z. B. hellgrau, ist (in Produktionslaufrichtung). Der dunklere Bereich der Folie stellt später den Armaturenbrettbereich am Frontfenster dar.

Nach einer besonders bevorzugten Ausführungsform wird der Druck der einzelnen Kunststoff- oder Extrudat-Massenströme (gemessen vor Eintritt in den Adapter), vorzugsweise der Druck der Masseströme für die Oberfolie (12), konstant oder annähernd konstant gehalten. Bevorzugt ist auch nach einer Ausführungsform der Druck der Masseströme für die Oberfolie ebenfalls im Adapter konstant.

Durch die Form und Stellung des keilförmigen oder im Querschnitt dreieckförmigen Vorsprungs und/oder durch die in dem Adapter oder der Blackbox (4) eintretenden Schmelzmassenströme, die durch die Kapazität der angeschlossenen Extruder und/oder die Eintrittsöffnung (oder Zuleitungen) beeinflußt und/oder gesteuert werden, werden die Bereiche A und F für die Oberfolie (12) in ihrer Breite eingestellt.

Nach einer bevorzugten Ausführungsform werden für die Oberfolienbereiche oder Oberflächenschichtbereiche A und F die gleichen Kunststoffe verwendet, jedoch unterschiedliche Farbstoffe und/oder Farbpigmente oder Farbstoff- und/oder Farbpigmentkonzentrationen eingesetzt. Durch diese Ausführungsform gelingt es einen Viskositätsunterschied für die Kunststoffe und auch für die gefärbte Schmelzmasse von Null oder annähernd Null einzustellen.

Nach der bevorzugten Ausführungsform wird somit die Spitze des keilförmigen oder im Querschnitt dreieckförmigen Vorsprunges (8), der oberhalb der Spalte oder der Öffnung für die Schmelze der Unterfolie(n) oder Unterschicht(en) angeordnet ist, auf den Spalt bzw. die Schmelzenöffnung für die Unterfolie gerichtet, wobei die Spitze zu dem dunkler gefärbten Bereich F gerichtet ist oder wird, so daß ein breiterer Oberflächenschichtenbereich A und ein kleinerer Oberflächenbereich F (dunkel gefärbt) bei der austretenden Folie eingestellt ist. Der keilförmige Vorsprung wird zusammen mit den Spalten oder Öffnungen für die Schmelzen auf ein Element, Formteil oder Einsatzteil, vorzugsweise auf einer Scheibe, angeordnet und das Formteil, Element oder Einsatzteil (9) wird vor dem Herstellungsverfahren in den Adapter oder in die Blackbox (4) eingesetzt, dort befestigt oder dort ausgewechselt. Nach einer bevorzugten Ausführungsform ist der keilförmige Vorsprung stegartig ausgebildet und im Adapter (4) oder auf dem Einsatzteil (9) angeordnet.

Der Einsatz oder das Einsatzteil (9) oder das Element ist so konstruiert, daß sich die beiden verschiedenfarbigen Oberfolienextrudate (Schmelzen) in der Blackbox nicht berühren und sich daher nicht vermischen können. Die Masseströme sind durch einen Steg oder den keilförmigen Vorsprung, der nach einer Ausführungsform stegartig ausgebildet ist, getrennt.

Nach einer Ausführungsform wird das Coextrudat auf die Schmelze der Trägerfolie (11), die aus dem Hauptextruder kommt, aufextrudiert bzw. aufgelegt. Die Masse fließt ohne sich zu vermischen zur Düse und verteilt sich auf die Breite der Düse gleichmäßig. Bevorzugt wird jedoch die Schmelze der Unterfolie oberhalb der farbigen bzw. gefärbten Schmelzen der Oberfolie angeordnet.

Aus der Düse tritt eine Schmelze aus, die mindestens eine Trägerfolie (11) oder Trägerschicht besitzt, auf der z.B. eine dunkelgraue und hellgraue Oberfolie liegt. Das Verhältnis in der Breite zwischen dunkelgrau und hellgrau wird durch die Lage des keilförmigen Vorsprungs oder Steges (8) in der Blackbox bestimmt, welche variabel ist (Einsatzteil).

Durch die Tatsache, daß es sich bei einer Ausführungsform bei den verschiedenfarbigen Schmelzen um das gleiche Produkt (Rezeptur) handelt, welches lediglich unterschiedlich eingefärbt ist, wird nach dieser bevorzugten Ausführungsform der Viskositätsunterschied auf Null oder annähernd Null eingestellt.

Die nach dem Verfahren hergestellten heißen Extrudatbahnen oder schmelzenförmigen Kunststoffbahnen werden anschließend einem Glättwalzwerk zugeführt, das mindestens zwei (6, 7), vorzugsweise mindestens drei (6, 7, 7'), Glättwerkwalzen aufweist, wobei die Glättwerkwalze, die mit dem zwei- oder mehrfarbigen Kunststoffextrudat der Oberfolie (12) in Berührung kommt, um mehr als 30 °C, vorzugsweise mehr als 45 °C, wärmer eingestellt ist als die Glättwerkwalze, die mit der bzw. den Unterfolie(n) (11) in Berührung kommt.

Dabei werden Glättwerkwalzen oder Glättwalzwerke (6, 7, 7') mit oder ohne Prägestruktur verwendet. Die Glättwerkwalzen sind gekühlt bzw. temperiert und werden somit auf die vorgenannten Temperaturbereiche eingestellt. Vorzugsweise werden mindestens zwei, vorzugsweise mindestens drei Glättwerkwalzen (6, 7, 7') verwendet. Die Glättwerkwalzen werden auf unterschiedliche Temperaturen eingestellt. Nach einer bevorzugten Ausführungsform ist bei der Verwendung von zwei Walzen die untere Glättwerkwalze oder bei drei oder mehreren Walzen die mittlere Glättwerkwalze, , die mit dem zwei- oder mehrfarbigen Kunststoffextrudat der Oberfolie (12) in Berührung kommt, um mehr als 30 °C, vorzugsweise mehr als 45 °C, wärmer eingestellt als die (obere) Glättwerkwalze, die mit der bzw. den Unterfolie(n) (11) in Berührung kommt. Durch die etwas wärmer eingestellte Glättwerkwalze werden die farbigen Extrudatstränge der Oberfolie (12) nicht abgeschreckt und vereinigen sich gut untereinander, ohne Verlust der farbigen Konturen, während die Kühlung durch die im Durchmesser kleiner gehaltene Walze an der Unterfolie erfolgt. Die Glättwerkwalze, auf die die Fläche der farbigen Oberfolie (bzw. farbigen Extrudate für die Oberfolie) auftrifft und aufliegt, hat somit einen größeren Durchmesser als die Walze, mit der die Unterfolie in Kontakt kommt. Diese Glättwerkwalze, auf die die Oberfolie aufliegt, bietet auch der Folie eine längere Verweil-dauer. So beträgt nach einer bevorzugten Ausführungsform die Temperatur der oberen Glättwerkwalze (z. B. Glättwerkwalze 6) 10 bis 28 °C, vorzugsweise 18 bis 24 °C, die Temperatur der darunter angeordneten Glättwerkwalze (z.B. Glättwerkwalze 7): 60 bis 85 °C, vorzugsweise 75 bis 82 °C, die Temperatur der folgenden Glättwerkwalze z.B. 7': 15 bis 35 °C, vorzugsweise 23 bis 33 °C. Nach einer bevorzugten Ausführungsform wird die Temperatur der dritten und/oder weiteren nachfolgenden Glättwalze(n) (7') und gegebenenfalls folgende Walzen) um mehr als 25 °C, vorzugsweise um mehr als 35 °C, unterhalb der Temperatur der Glättwerkwalze, d. h. der Walze (am Eintritt) mit dem größten Walzendurchmesser eingehalten. Bevorzugt ist die Temperatur der dritten (7') Walze und/oder einer oder mehrerer nachfolgender Walze(n) mindestens gleich der Temperatur der oberen Glättwerkwalze (6), sie liegt jedoch vorzugsweise um mehr als 5 °C oberhalb der Temperatur der oberen Eintrittsglättwerkwalze (6).

Nach einer Ausführungsform wird die Folie anschließend mit einem Schutzlack versehen. Nach einer weiteren Ausführungsform wird die Folie mit einer Narbung oder Prägung versehen.

Die nach dem erfindungsgemäßen Verfahren hergestellten Kunststoffolien werden bevorzugt einem Tiefziehvorgang unterworfen, hinterschäumt und zu Armaturenbrettern weiterverarbeitet.

Nach einer weiteren bevorzugten Ausführungsform enthalten die gemäß der Erfindung zu extrudierenden Kunststoffzusammensetzungen der Unter- und/oder der verschiedenfarbigen oder zweifarbigen Oberfolie(n) mindestens ein Vernetzungsmittel oder Vernetzungsmittelgemisch, vorzugsweise ein polymeres Vernetzungsmittel oder Vernetzungsmittelgemisch, das mindestens ein polymeres Vernetzungsmittel enthält. Bevorzugt ist das Vernetzungsmittel, vorzugsweise polymere Vernetzungsmittel, in der Kunststoffzusammensetzung bzw. dem Extrudat der Unterfolie(n) enthalten. Nach einer bevorzugten Ausführungsform ist weiterhin bei dieser letztgenannten Ausführungsform das Extrudat der Unterfolie(n) oberhalb der zwei oder mehrere unterschiedlich gefärbte Extrudatteilströme enthaltenden Oberfolie angeordnet, so daß die zwei oder drei Teilströme des Extrudates der Oberfolie, die unterschiedliche Farben oder Farbtönungen aufweisen, von der Schmelzenbahn bzw. der Extrudatbahn der Unterfolie(n) bedeckt sind. Dadurch erfolgt eine schnellere bzw. bessere Vereinigung der Folienbahnen, wobei die Konturen erhalten bleiben. Bei der Ausführungsform unter Verwendung von Vernetzungsmitteln, vorzugsweise polymeren Vernetzungsmitteln, werden diese der Kunststoffmischung, vorzugsweise der (den) Unterfolie(n), zugefügt, zusammen mit einer chemischen vernetzbaren oder teilvernetzbaren Verbindung, z. B. EPDM.

Bevorzugt enthalten die Kunststoffzusammensetzungen der Ober- und Unterfolie mindestens ein Polyolefin oder eine Polyolefinmischung und/oder ein Styrol-Pfropf- oder -Blockpolymerisat sowie im Falle der Unterfolie zusätzlich mindestens ein polymeres Vernetzungsmittel.

Nach einer bevorzugten Ausführungsform sind Massendrücke der unterschiedlich farbigen Extrudatströme (gemessen bei Austritt aus dem Extruder bzw. Coextruder) gleich oder annähernd gleich und unterscheiden sich um weniger als 45 bar, voneinander, wobei die Massendrücke der unterschiedlichen Extrudatströme jedoch vorzugsweise höher als 280 bar, liegen und/oder die Massetemperaturen der unterschiedlich farbigen Extrudatströme (gemessen beim Austritt aus dem Extruder) sich um weniger als 30 °C, vorzugsweise weniger als 15 °C, voneinander unterscheiden, wobei die Massetemperatur der unterschiedlich farbigen Extrudatströme (gemessen bei dem Austritt aus dem Extruder) auf mehr als 190 °C, vorzugsweise mehr als 210 °C, eingestellt ist.

Bevorzugt beträgt der Massedruck der unterschiedlich farbigen Extrudatströme (gemessen beim Austritt aus dem Extruder, d. h. vor dem Adapter oder der Blackbox) 300 bis 450 bar, vorzugsweise 340 bis 440 bar, und die Massetemperatur (gemessen beim Austritt aus dem Extruder) 200 bis 250 °C, vorzugsweise 220 bis 245 °C.

Nach einer bevorzugten Ausführungsform wird für die einzusetzende Kunststoffzusammensetzung der Unterfolie(n) (11) mindestens ein Vernetzungsmittel, vorzugsweise ein polymeres Vernetzungsmittel, verwendet.

Das reaktive Gruppen enthaltende polymere Vernetzungsmittel der Unterfolie oder Unterfolien weist nach einer bevorzugten Ausführungsform neben Acrylat- und/oder Methacrylat-Gruppen bzw. Acrylsäure- und/oder Methacrylsäuregruppen und mehr als 51 Gew.-% Ethylen- und/oder Olefin bzw. (CH₂)- oder CH-Gruppen, Epoxidgruppen oder epoxyähniche Gruppen, vorzugsweise Glycidylgruppen, auf

Die reaktive Gruppen enthaltenden Polymeren und/oder Ionomeren der Unterfolie enthalten als Metallion vorzugsweise Alkali- und/oder Erdalkali-Ionen und/oder Zinkionen.

Nach einer Ausführungsform enthalten die reaktive Gruppen aufweisenden Polymeren und/oder Ionomeren Alkylacrylate und/oder Alkylmethacrylate mit 1 bis 8 C-Atomen.

Die zwei verschiedenfarbigen Schmelzen werden durch Coextrusion somit auf eine Trägerschmelze (11) aufgelegt, vorzugsweise jedoch von der Schmelze der Unterfolie bedeckt. Dadurch, daß sich diese zwei Schmelzen aufgrund ihrer nahezu gleichen Viskosität auf dem Weg zur Düse und in der Düse nicht vermischen und sich gleichmäßig über die Düsenbreite verteilen, nachdem sie vorher im Adapter oder in der Blackbox (4) getrennt waren, wird die Farbflächenverteilung der Oberfolie oder Oberschicht erzielt.

Die Erfindung betrifft weiterhin eine Vorrichtung zur Herstellung von zwei- oder mehrfarbigen Schalttafelfolien, Armaturenbrettfolien oder daraus hergestellten Armaturenbretter, enthaltend mindestens zwei Extruder (1 bzw. 2, 3), mindestens einen Adapter oder eine Blackbox (4), mindestens drei Öffnungen und/oder Zuführungsanschlüsse für die Kunststoffschmelzzuführung von dem jeweiligen Extruder sowie einer dem Adapter nachgeschalteten Breitschlitzextruderdüse (5) (Düsenblock). Gemäß der Erfindung sind mindestens zwei der in dem Adapter angebrachten Öffnungen beidseitig neben einem keilförmigen oder im Querschnitt dreieckförmigen Vorsprung (8) angeordnet und mindestens eine weitere Eintrittsöffnung oder ein Eintrittsschlitz für mindestens eine Unterschicht ist unterhalb der beidseitig angeordneten Öffnungen angebracht. Bevorzugt werden dabei drei oder mehrere Extruder eingesetzt.

Die Spitze des keilförmigen oder im Querschnitt dreieckförmigen Vorsprunges (8), der oberhalb der Spalte oder der Öffnung für die Schmelze der Unterfolie(n) oder Unterschicht(en) angeordnet ist, ist auf den Spalt bzw. die Schmelzenöffnung für die Unterfolie gerichtet. Nach einer Ausführungsform ist die Spitze zu dem dunkler gefärbten Bereich F gerichtet, so daß ein breiterer Oberflächenschichtenbereich A und ein kleinerer Oberflächenbereich F (dunkel gefärbt) bei der austretenden Folie eingestellt ist. Nach einer weiteren bevorzugten Ausführungsform ist der keilförmige Vorsprung im Adapter oder in der Blackbox (4) stegartig ausgebildet oder stegartig verlängert. Bevorzugt ist der keilförmige Vorsprung auf einem in den Adapter oder in die Blackbox einsetzbaren (4) oder befestigbaren Element, Formteil oder Einsatzteil, vorzugsweise auf einer Scheibe, angeordnet.

Der keilförmige Vorsprung (8) ist auf einem in den Adapter oder in die Blackbox einsetzbaren oder befestigbaren Element, Formteil oder Einsatzteil (9), vorzugsweise auf einer Scheibe, angeordnet, wobei jedoch das jeweilige Element, Formteil oder Einsatzteil, vorzugsweise die Scheibe, und der Vorsprung aus starrem Material, vorzugsweise Metall, bestehen und sich unter dem Einfluß der Masseströme nicht verändern oder verformen.

Nach einer weiteren bevorzugten Ausführungsform bildet der keilförmige oder im Querschnitt dreieckförmige Vorsprung mit dem Spalt oder der Schmelzenöffnung für die Unterfolie (11) einen Winkel unter 90° (für einen Farbbereich) und einen Winkel über 90° und unter 160°, vorzugsweise unter 150°, (für den anderen Farbbereich).

Der erfindungsgemäßen Vorrichtung ist ein Glättwalzwerk mit mindestens zwei Walzen (6, 7) bzw. (6, 7, 7') nachgeordnet.

Die Erfindung betrifft weiterhin die Verwendung der nach dem Verfahren hergestellten Folien, bestehend aus mindestens einer Trägerschicht oder Trägerfolie, mindestens einer darauf angeordneten Farbstoffe und/oder Farbpigmente enthaltende Oberfolie oder Oberschicht (12) sowie gegebenenfalls einer oder mehreren weiteren Schicht(en) oder Folie(n), wobei die Oberfolie oder Oberschicht (12) aus mindestens zwei parallel oder annähernd parallel verlaufenden, in der Aufsicht rechteckig- oder parallelogrammförmigen verschiedenartig gefärbten oder pigmentierten Zonen oder Abschnitten besteht und die verschiedenfarbige(n) Oberfolie(n) oder Oberschicht(en) zusammen mit mindestens einer Unterfolie oder Unterschicht (11) durch Coextrusion oder Mehrfachextrusion als Verbundfolie hergestellt ist, zur Herstellung von Armaturenbrettern innerhalb eines Tiefziehvorganges.

Nach einer bevorzugten Ausführungsform ist in der Kunststoffzusammensetzung für die Ober- und/oder Unterfolie mindestens ein Propylenhomo-, -co- oder -pfropfpolymerisat, Propylen-Block-Copolymerisat oder heterophasiges Propylen-Block-Copolymerisat und/oder EPM oder EPDM oder ein vernetztes oder teilvernetztes PP-EPDM sowie in der Rezeptur der Unterfolie ein reaktive Gruppen aufweisendes polymeres Vernetzungsmittel enthalten, wobei die Rezepturen für die zwei- oder mehrfarbigen Oberfolien sich nur in den Zusatzstoffen, vorzugsweise in den Farbstoffen und/oder Farbpigmenten, und/oder gegebenenfalls Füllstoffen unterscheiden.

Es wurde festgestellt, daß für das erfindungsgemäße Verfahren zur Herstellung von zwei- oder mehrfarbigen Schalttafelfolien ein Kunststoffrezeptur für die Unterfolie sehr gut geeignet ist, die (bezogen auf 100 Gew.-Teile Kunststoff der Folie) als Unterfolie bis 60 Gew.-% mindestens eines teilweisen vernetzten EPDM, 12 bis 30 Gew.-% Propylenhomo-, -copolymerisat oder -pfropfpolymerisat mit oder ohne reaktive Gruppen, 77 bis 9,5 Gew.-% mindestens eines reaktive Gruppen enthaltenden Polymeren und/oder Ionomeren auf der Basis von Ethylen und Methacrylsäure oder Acrylsäure, wobei die Säure-Gruppen teilweise Metallionen enthalten oder durch Metallionen neutralisiert sind, und 10 bis 0,5 Gew.-% mindestens eines reaktive Gruppen enthaltendes polymeres Vernetzungsmittel, das zu mehr als 51 Gew.-% (bezogen auf 100 Gew.-Teile) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton-, Aldehyd-, Silan-, Alkylhalogenid- und/oder Anhydridgruppen gelten sowie gegebenenfalls mindestens einen Füllstoff, Zusatz- und/oder Verarbeitungshilfsmittel enthalten sind oder die Kunststoffmischung besteht daraus. Für die Zusammensetzung der zwei- oder mehrfarbigen Oberfolie ist im Rahmen des erfindungsgemäßen Verfahrens eine Kunststoffzusammensetzung besonders gut geeignet, die (bezogen auf 100 Gew.-Teile Kunststoff der Oberfolie) 20 bis 80 Gew.-Teile mindestens eines vernetzten PP-EPDM (Legierung oder Mischung aus Propylenhomo- und/oder -copolymerisat und vernetztem oder teilvernetztem Ethylen-Propylen-Dien-Mischpolymerisates), 80 bis 20 Gew.-Teile eines unvernetzten Propylen-Block-Copolymerisates oder heterophasigen Propylen-Block-Polymerisates, mit einem Elastomeranteil im Block bzw. in der Kette von 35 bis 75 Gew.-% (bezogen auf 100 Gew.-Teile des unvernetzten heterophasigen Propylen-Block-Copolymerisates oder Propylen-Block-Polymerisates) enthält, wobei zu 15 bis 1 Gew.-%, vorzugsweise 10 bis 20 Gew.-% durch die gleichen Gewichtsmengen eines reaktive Gruppen enthaltenden Polymeren und/oder Ionomeren ersetzt ist, wobei mindestens ein reaktive Gruppen enthaltendes Polymer und/oder Ionomer auf der Basis von Ethylen und Methacrylsäure und/oder Acrylsäure enthält und die Säure-Gruppen teilweise Metallionen enthalten oder durch Metallionen neutralisiert sind, wobei die Ober- und Unterfolie gegebenenfalls Füllstoffe, Zusatz- und/oder Verarbeitungshilfsmittel enthalten.

Die Zusammensetzung der Oberfolie enthält dabei vorzugsweise ein dynamisch vernetztes oder teilvernetztes PP-EPDM oder PP-EPDM-Mischungen oder Legierungen. Die Bestandteile und der Oberfolie werden gegebenenfalls in Kombination mit Verarbeitungshilfs-, Zusatzmitteln, Füllstoffen, vorzugsweise jedoch Farbstoffen und/oder Farbpigmenten, eingesetzt.

Nach einer bevorzugten Ausführungsform der Oberfolie liegt der Schmelzindex MFI (230/2,16) des dynamisch vernetzten oder teilvernetzten PP-EPDM-Gemisches (bestimmt nach DIN 53735) unter 12 g/10 min, vorzugsweise unter 8 g/10 min, besonders bevorzugt unter 6 g/10min. Nach einer vorzugsweisen Ausführungsform weist dabei einer der Bestandteile einen Schmelzindex MFI (230/2,16) von unter 4,8 g/10 min, vorzugsweise unter 2,5 g/10 min, besonders bevorzugt unter 1,8 g/10 min auf, während der andere Bestandteil des PP-EPDM-Gemisches einen höheren MFI besitzt.

Besonders bevorzugt weist dabei für die Oberfolie das in der PP-EPDM-Mischung oder dispergiert darin vorliegende Polypropylen oder der Homo- oder Copolymerisatanteil des Polypropylen einen niedrigeren Schmelzindex auf. Nach einer bevorzugten Ausführungsform hat das PP (Polypropylen) oder der dispergiert in der Mischung enthaltende Homo- oder Copolymerisatanteil (PP) einen Schmelzindex MFI (230/2,16) von 0,1 bis 2 g/10min, vorzugsweise 0,3 bis 1,5 g/10 min (Bestimmungsmethode nach DIN 53735).

Der Polypropylen-Block des unvernetzten heterophasigen Polypropylen-Block-polymerisates besteht vorzugsweise aus einem Propylen-, -co- und/oder -blockpolymerisat. Der Elastomeranteil des heterophasigen Polypropylen-Blockcopolymerisates beträgt nach einer vorzugsweisen Ausführungsform 40 bis 70 Gew.-% (bezogen auf 100 Gew.-Teile des unvernetzten heterophasigen Propylen-Block-Copolymerisats). Nach einer anderen bevorzugten Ausführungsform beträgt jedoch der Elastomeranteil des heterophasigen Polypropylen-Block-Copolymerisates 35,5 bis 48 Gew.-%, vorzugsweise 36 bis 45 Gew.-% (bezogen auf 100 Gew.-Teil des unvernetzten heterophasigen Propylen-Block-Polymerisates).

Nach einer bevorzugten Ausführungsform besitzt das Elastomer des Ethylen-Propylen-Copolymerisates einen Ethylenanteil von 20 bis 70 Gew.-%, vorzugsweise 30 bis 60 Gew.-%, und einen Propylenanteil von 80 bis 30 Gew.-%, vorzugsweise 70 bis 40 Gew.-%, und weist ein Molekulargewicht größer als 100.000, vorzugsweise größer als 150.000 auf.

Der Zusatz eines dynamisch vernetzten PP-EPDM-Blends in der Ober- und/oder Unterfolie mit einer Teilchengröße der vernetzten Elastomerphase von 0,5 bis 15 µm verbessert den Verformungsbereich, die Gleichmäßigkeit der Wärmedehnung und das Narbbild. Ein verbessertes Narbbild bedeutet, daß die überproportionale Verdehnung der Narbtäler durch die mit zunehmender Dehnung ansteigende Festigkeit begrenzt wird (strain hardening). Um diesen Effekt zu erreichen, ist eine homogene Einarbeitung der vernetzten PP-EPDM-Blends und eine partikelförmige Elastomerstruktur notwendig. Daraus resultieren gewisse Anforderungen an den Vernetzungsgrad und den Schmelzindex der verwendeten vernetzten PP-EPDM-Blends. Der Vernetzungsgrad bei den komplexen Systemen, indirekt definiert durch den Kompressionsset bei 70 °C nach 22 Std. (DIN 53517), soll zwischen 25 und 60 liegen.

Als heterophasiges Propylen-Block-Polymerisat wird vorzugsweise ein Blockpolymerisat mit einem MFI 230/2,16 g/10 min von 0,3 bis 8, vorzugsweise 0,5 bis 7, verwendet.

Als PP-EPDM, vorzugsweise dynamisch vernetztes oder teilvernetztes PP-EPDM, werden für die Ober- und/oder Unterfolie(n) bevorzugt solche mit einer Dichte zwischen 0,78 bis 0,96 g/cm³, vorzugsweise 0,83 bis 0,93 g/cm³, angesetzt. Bevorzugt weist das PP-EPDM, das dafür ausgewählt wird, einen Biegemodul (Initial flexural modulus) - gemessen nach ASTM D 790 mit einer 2 mm dicken Folienbahn - von 80 bis 400 MPa, vorzugsweise 100 bis 300 Mpa, auf.

Nach einer bevorzugten Ausführungsform besteht die Unterfolie oder Unterfolien (bezogen auf 100 Gew.-Teile Kunststoff der Unterfolie bzw. Unterfolien) aus 5 bis 55 Gew.-% mindestens eines teilweise vernetzten EPDM, 13 bis 25 Gew.-% Propylenhomo-, copolymerisat oder -pfropfpolymerisat mit oder ohne reaktive Grupppen, 73 bis 19 Gew.-% mindestens eines reaktive Gruppen enthaltenden Polymeren und/oder Ionomeren auf der Basis von Ethylen und Methacrylsäure oder Acrylsäure, wobei die Säuregruppen teilweise Metallionen enthaltem oder durch Metallionen neutralisiert sind und 9 bis 1 Gew.-% mindestens eines reaktive Gruppen enthaltendes polymeres Vernetzungsmittel, das zu mehr als 51 Gew.-% (bezogen auf 100 Gew.-Teile) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton, Aldehyd-, Silan-, Alkylhalogenid- und/oder Anhydridgruppen gelten oder die Unterfolie(n) enthält diese Bestandteile.

Die erfindungsgemäßen tiefziehfähigen Verbundfolien besitzen auf der Oberfolie einen Glanzgrad nach DIN 57530/60° von 0,5 bis 5, der weder von der erforderlichen Verformungstemperatur noch von dem Tiefziehverhältnis wesentlich beeinflußt wird. Dieses Merkmal unterscheidet also die erfindungsgemäßen Folien von den nach bisherigen Erfahrungen gesammelten Erkenntnissen mit Folien, die durch Füllstoffe oder Prägung mattiert wurden.

Unter Verwendung des erfindungsgemäßen Zusatzes bzw. der erfindungsgemäßen Mischung zur Herstellung von tiefziehfähigen Kraftfahrzeugfolien gelingt es, Kunststoffolien mit einer matten Oberfläche und hoher Elastizität für die Thermoverformung zu erhalten. Dabei kann die Thermoverformung der erfindungsgemäßen Verbundfolie in einem breiten Temperaturintervall von ca. 140 bis 200 °C, vorzugsweise 150 bis 185 °C, durchgeführt werden, ohne daß besondere Schwierigkeiten auftreten. Die Folie ist ausgezeichnet tiefziehfähig und sowohl im Positivtiefziehverfahren als auch im Negativtiefziehverfahren einsetzbar. Unter Verwendung der Zusammensetzung gelingt es, Tiefziehfolien mit einer Shore-D-Härte von 25 bis 60, vorzugsweise 30 bis 55, und einen Glanzgrad nach Gardner 60 °C von 0,5 bis 1,5, gemessen am tiefgezogenen Formteil, zu erhalten.

Die erfindungsgemäßen Kraftfahrzeugverbundfolienbahnen für die Innenverkleidung haben darüberhinaus den Vorteil der hohen Alterungsstabilität gegen Licht und Wärme sowie geringe Fog-Werte.

Nach einer bevorzugten Ausführungsform weist die Ober- und/oder Unterfolie einen Füllstoffgehalt von 0 bis 30 Gewichtsanteilen` vorzugsweise 0 bis 20 Gewichtsanteilen (bezogen auf 100 Gewichtsanteile Kunststoff), auf. Als Füllstoffe können die an sich bekannten Füllstoffe, vorzugsweise Talkum und/oder Si0 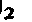 mit einer mittleren Teilchengröße von 0,01 bis 20 µm, vorzugsweise 0,05 bis 10 µm, eingesetzt werden.

Als Verarbeitungshilfsmittel werden u.a. vorzugsweise Wärme- und/oder Lichtstabilisatoren für Polyolefine eingesetzt.

Als weitere Verarbeitungshilfsmittel oder Zusatzmittel werden u.a. Gleitmittel oder Gleitmittelgemische verwendet.

Nach einer Ausführungsform ist unterhalb der Folienschicht vorzugsweise eine Haftvermittlerschicht angeordnet. Die Haftvermittlerschicht besteht vorzugsweise aus Acrylaten, Polyurethan oder Acrylat-Polyurethan-Mischungen oder enthält diese. Unterhalb der Folienschicht oder Haftvermittlerschicht ist vorzugsweise eine Schaumschicht, eine Trägerschicht, eine Gewebeschicht und/oder Stützschicht angeordnet. Die Schaumschicht enthält vorzugsweise einen Polyolefinschaum oder einen Polyurethanschaum oder besteht daraus.

Bevorzugt hat die Oberfolie eine mittlere Dicke von 60 bis 500 µm, vorzugsweise 100 bis 350 µm. Die Unterfolie oder Unterfolien besitzen eine durchschnittliche Dicke von 100 bis 2000 µm, vorzugsweise 500 bis 1500 µm, wobei die Unterfolie oder Unterfolien eine Gesamtdicke besitzen, die mehr als das 1,5-fache, vorzugsweise 2- oder Mehrfach der Oberfolie beträgt.

Die erfindungsgemäße Verbundfolie ist sehr gut thermoverformbar und dient zur Herstellung spannungsarmer Formteile mit genauer Wiedergabe oder Reproduktion von form- oder temperaturstabilen Oberflächenstrukturierungen. Die Verbundfolie wird vorzugsweise im Positivtiefziehverfahren und/oder Negativtiefziehverfahren bearbeitet bzw. verarbeitet. Der Verbundwerkstoff weist an der Unterseite oder Unterfläche vorzugsweise eine Schaumschicht, z.B. Polyurethanschaum, vorzugsweise jedoch Polyolefinschaum, auf und/oder ist mit einer Trägerschicht bzw. einem Träger und/oder einer Stützschicht und/oder einer Gitter- oder Gewebeschicht versehen. Die Folie oder Schicht wird nach einer bevorzugten Ausführungsform mit Dekorgebungen, Narbungen, Prägungen und dgl. versehen, ist narbbeständig, grifffreundlich und kann bedruckt werden. Unter Verwendung der erfindungsgemäßen Verbundfolie gelingt es Formteile oder Gegenstände herzustellen, deren Oberfläche eine gute Narbstabilität auch bei Wärmelagerung aufweisen.

Nach einer bevorzugten Ausführungsform ist dabei die Trägerschicht und/oder Schaumschicht polyolefinhaltig oder auf der Basis von Polyolefinen.

Das reaktive Gruppen enthaltende polymere Vernetzungsmittel der Unterfolie oder Unterfolien weist nach einer bevorzugten Ausführungsform neben Acrylat- und/oder Methacrylat-Gruppen bzw. Acrylsäure- und/oder Methacrylsäuregruppen und mehr als 51 Gew.-% Ethylen- und/oder Olefin- bzw. (CH 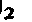 )- oder CH-Gruppen, Epoxidgruppen oder epoxyähnliche Gruppen, vorzugsweise Glycidylgruppen, auf

Die reaktive Gruppen enthaltenden Polymeren und/oder Ionomeren der Unterfolie enthalten als Metallion vorzugsweise Alkali- und/oder Erdalkali-Ionen und/oder Zinkionen.

Nach einer Ausführungsform enthalten die reaktive Gruppen aufweisenden Polymeren und/oder Ionomeren Alkylacrylate und/oder Alkylmethacrylate mit 1 bis 8 C-Atomen.

Nach einer bevorzugten Ausführungsform der Erfindung weist die Oberfolie eine Shore D-Härte auf oder ist darauf eingestellt, die um mehr als 3 Shore D-Einheiten, vorzugsweise 5 bis 10 Shore D-Einheiten, niedriger ist als die Shore D-Härte der Unterfolie(n) und/oder die Oberflächenspannung der Oberfolie ist auf einen Wert von größer als 40 mN/m eingestellt.

Vorzugsweise ist die Shore-D-Härte der Oberfolie unter gewichtsmäßiger Auswahl der Bestandteile der Oberfolie, vorzugsweise der Bestandteile innerhalb der angegebenen Gewichtsmengen der Bestandteile auf eine Shore D-Härte von weniger als 37, vorzugsweise auf eine Shore D-Härte von 28 bis 35, eingestellt und/oder die Shore D-Härte der Unterfolie(n) ist unter gewichtsmäßiger Auswahl der Bestandteile der Unterfolie(n), vorzugsweise der Bestandteile innerhalb der angegebenen Gewichtsmengen auf mindestens 38 Shore D, vorzugsweise 39 bis 48 Shore D, eingestellt.

Nach einer weiteren bevorzugten Ausführungsform ist oberhalb der Oberfolie oder auf der Folienoberfläche und/oder unterhalb der Unterfolie mindestens eine polyacrylat-, polymethacrylat- und/oder polyurethanhaltige Schicht angeordnet, deren Schichtdicke geringer als die Schichtdicke der Oberfolie oder Unterfolie ist, wobei vorzugsweise die Schichtdicke der Beschichtung weniger als 50 % der Schichtdicke der Ober- und Unterfolie(n) beträgt.

Dabei sind bevorzugt die Oberfolie und gegebenenfalls Teilbereiche der Unterfolie(n) geprägt oder genarbt und die Oberfolie ist mit einer polyacrylat-, polymethacrylat- und/oder polyurethanhaltigen Schicht oder Beschichtung versehen, die 0,01 bis 18 Gew.-%, vorzugsweise 0,1 bis 12 Gew.-%, mindestens eines feinteiligen Mattierungsmittels enthält und durch Verdünnungsmittelauftrag beschichtet ist.

Nach einer weiteren Ausführungsform enthält die Kunststoffzusammensetzung der Unterfolie als Kunststoff 65 Gew.-% bis 90 Gew.-% (bezogen auf 100 Gew.-% Kunststoffanteil der Unterfolie) Propylenhomo-, -co-, -ter- und/oder -blockpolymerisat und 35 bis 10 Gew.-% Ethylenvinylacetat-Copolymerisat mit einem Vinylacetatgehalt von 10 bis 40 Gew.-% sowie gegebenenfalls 0,1 bis 5,0 Gew.-% eines Vernetzungsmittels, vorzugsweise polymeren Vernetzungsmittels, oder mindestens eines Peroxydes oder einer peroxydgruppenhaltigen Verbindung.

Nach einer anderen Ausführungsform enthält die Kunststoffzusammensetzung der Unterfolie mindestens ein teilvernetztes EPDM ein Propylenhomo-, -copolymerisat oder -pfropfpolymerisat mit oder ohne reaktive Gruppen sowie gegebenenfalls ein Ionomer oder reaktive Gruppen enthaltendes Polymer oder ein Styrol oder Polystyrol enthaltendes Block-, Diblock- oder Triblock und/oder Propfpolymerisat, das ganz oder teilweise durch ein Modifizierungsmittel auf der Basis eines Propylenmaleinsäureanhydrid-Misch- oder Pfropfpolymerisat, eines Propylenacrylsäure-Misch- oder Pfropypolymerisates, eines Ethylen-Vinylacetat-Copolymerisates, eines Ethylenacrylsäure- bzw. Methacrylsäure-Copolymerisates, eines Ethylenacrylsäure-Copolymerisates, eines Ethylenacrylsäureester-Copolymerisates, eines Glycidyl-Methacrylat-Co- und/oder -terpolymerisates, vorzugsweise eines olefinischen oder olefingruppenhaltigen Glycidyl-Methacrylat-Co- und/oder -terpolymerisates, eines Ethylen-Glycidyl-Methacrylat-Terpolymerisates, eines olefinischen Ionomeren, eines Polyurethans, eines Polycaprolactons, eines Polyesterethers und/oder eines Polyetheramids ersetzt ist.

Bevorzugt werden die Bestandteile der Unterfolie so ausgewählt, daß die daraus hergestellte Unterfolie (bezogen auf den Anfangs- oder Ausgangsquerschnitt der Unterfolie) eine maximale Dehn-Spannung im Bereich von 30x10² bis 150x10² aufweist (wobei diese Werte bei einer konstanten Verformungsgeschwindigkeit bei 170 °C ermittelt werden) und/oder daß die Dehn-Spannungskurve bei einer Dehnung über 150 %, vorzugsweise über 300 % Dehnung, nach Erreichung des Maximums annähernd parallel zur Dehungsachse verläuft und/oder nur geringe Viskositätsunterschiede bei den jeweiligen Verarbeitungstemperaturen der zwei- oder mehrfarbigen Oberfolie gegeben sind.

Nach einer weiteren Ausführungsform werden für die Rezeptur der zwei- oder mehrfarbigen Oberfolie als Kunststoffanteil oder Kunststoffmischung (x) 5 bis 80 Gew.-Teile mindestens eines elastischen reaktive Gruppen enthaltenden Polymeren oder mindestens eines thermoplastischen reaktive Gruppen enthaltenden Elastomeren oder eines reaktive Gruppe enthaltenden Polymeren oder Polymergemisches mit einem Anteil an elastischen Polymeren von mehr als 60 Gew.-% (bezogen auf 100 Gew.-Teile des elastomerhaltigen Polymeren oder Polymergemisches), (y) 95 bis 20 Gew.-Teile mindestens eines reaktive Gruppen enthaltenden Olefin-Co-, -ter- und/oder pfropfpolymerisates und/oder eines Ionomeren enthaltend oder auf der Basis eines Polyolefinhomo-, -co-, -ter- und/oder -pfropfpolymerissates, enthält oder daraus besteht, wobei vorzugsweise der E-Modul der Mischung von (x) und (y) oder der E-Modul der daraus thermogeformten Kunststoffolie oder Kunststoffolienbann oder der Schicht zwischen 30 bis 1000 N/mm², vorzugsweise zwischen 50 bis 600 N/mm², liegt, wobei die reaktiven Gruppen Carboxyl-, Hydroxyl-, Anhydrid-, Amin-, Amid-, Isocyanat-, Epoxy- und/oder Nitro-Gruppen sind und/oder die Viskosität wird so eingestellt, daß nur geringe Viskositätsunterschiede bei der jeweiligen Verarbeitungstemperatur zur Unterfolie bestehen.

Der Gewichtsanteil beträgt nach einer Ausführungsform 0,2 bis 30 Gew.-%, vorzugsweise 0,3 bis 25 Gew.-%, bezogen auf das oder die reaktive Gruppen enthaltenden elastischen Polymeren (berechnet mit 100 Gew.-Teilen) oder reaktive Gruppen enthaltenden thermoplastischen Elastomeren oder Polymermischungen gemäß (x) und 0,2 bis 25 Gew.-%, vorzugsweise 0,5 bis 20 Gew.-%, bezogen auf das oder die reaktive Gruppen enthaltende(n) Polyolefin(e) oder polyolefinhaltige(n) Ionomere(n) (gemäß (y)).

### Zeichnungsbeschreibung

In den Zeichnungen sind Ausführungsformen des erfindungsgemäßen Verfahrens unter Verwendung der erfindungsgemäßen Vorrichtungen schematisch dargestellt.

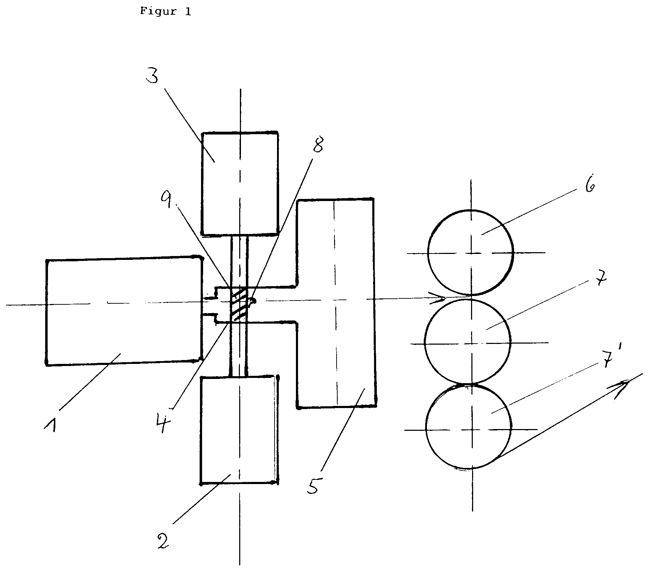

In Figur 1 ist der Extruder (1) mit Coextrusionsvorrichtung (2) und (3), der Blackbox (4) und der Breitschlitzdüse (5) versehen bzw. mit diesen kombiniert.

Bei der einfachen Ausführungsform gemäß Figur 1 gelangt die mehrschichtige Verbundfolie zu den Glättwerkwalzen (6) und (7) (mit oder ohne Prägestruktur) und der weiteren Glättwerkwalze (7').

Gemäß der bevorzugten Ausführungsform in Figur 1 ist der keilförmige oder im Querschnitt dreieckförmige Vorsprung (8) im Adapter oder der Blackbox schematisch dargestellt. Der Vorsprung (8) ist dem Einsatzteil (9) angeordnet.

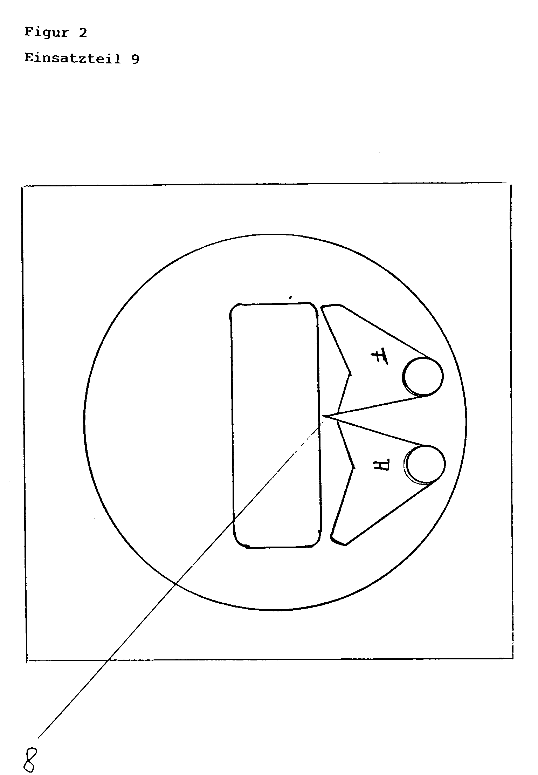

Die Figur 2 stellt eine Aufsicht auf das in den Adapter oder in die Blackbox einzubringende oder zu befestigende Einsatzteil dar.

In Figur 2 sind zwei der in dem Adapter angebrachten kreisförmigen Öffnungen beidseitig neben einem keilförmigen oder im Querschnitt dreieckförmigen Vorsprung angeordnet und mindestens eine weitere Eintrittsöffnung oder ein Eintrittsschlitz ist für mindestens eine Unterschicht unterhalb der beidseitig angeordneten Öffnung angebracht.

## Patentansprüche

1. Verfahren zur Herstellung von zwei- oder mehrfarbigen Folien (10) unter Verwendung einer Trägerfolie oder Trägerschicht (11), mit mindestens einer darauf angeordneten Farbstoffe und/oder Farbpigmente enthaltenden Oberfolie oder Oberschicht (12), wobei die aus zwei oder mehreren Extrudern (1) kommenden Kunststoffschmelzen für diese Folien oder Schichten vor dem Austritt aus der Düse durch mindestens einen keilförmigen oder im Querschnitt dreieckförmigen Vorsprung getrennt oder teilweise getrennt sind, jedoch danach nebeneinander und/oder übereinander geführt werden und sich die verschiedenfarbigen Schmelzen der Oberfolie (12) mit der Schmelzschicht der Unterfolie oder Unterschicht vor dem Austritt aus der Extruderdüse vereinigen, dadurch gekennzeichnet, daß die Kunststoffschmelzen kontinuierlich einem Adapter oder einer Blackbox (4) mit mindestens einer Öffnung oder einem Spalt für die Trägerfolie oder -schicht (11) und mindestens einer weiteren Öffnung für die Oberfolie oder Oberschicht (12), zugeführt werden, wobei ein Adapter oder eine Blackbox (4) verwendet wird, in dem bzw. in der der keilförmige Vorsprung (8) oder im Querschnitt dreieckförmige Vorsprung angeordnet ist, wobei die Spitze des keilförmigen Vorsprunges (8) auf den Spalt oder die Spalten für die Unterfolie zeigt, daß mindestens zwei verschiedenfarbige schmelzförmige Kunststoffe für die Oberfolie oder Oberschicht (12), die die gleiche Viskosität oder nahezu gleiche Viskosität, Unterschied der MFI bei 230 °C/2,16 kg von 0 bis 0,5 g/10 min, aufweisen, nach dem Durchtritt durch den Adapter oder die Blackbox (4) ohne Verwendung eines, die beiden Schmelzen trennenden Stege nebeneinander und/oder übereinander geführt werden, daß die Massendrucke der unterschiedlich farbigen Extrudatströme, gemessen bei Austritt aus dem Extruder (1) bzw. Coextruder (2) (3), gleich oder annähernd gleich sind und sich um weniger als 60 bar voneinander unterscheiden, wobei die Massendrücke der unterschiedlichen Extrudatströme jedoch höher als 250 bar liegen und daß die so hergestellten Folien (10) als Schalttafelfolien, Armaturenbrettfolien oder daraus hergestellt Armaturenbretter verwendet werden.

2. Verfahren nach Anspruch 1, dadurch gekennzeichnet, daß die Massetemperaturen der unterschiedlich farbigen Extrudatströme, gemessen beim Austritt aus dem Extruder, sich um weniger als 30 °C voneinander unterscheiden, wobei die Massetemperatur der unterschiedlich farbigen Extrudatströme, gemessen beim Austritt aus dem Extruder, auf mehr als 190 °C eingestellt ist, daß die unterschiedliche Farbstoffgehalte und/oder Farbpigmentgehalte aufweisenden Schmelzen für die Oberfolie oder Oberschicht (12) beidseitig neben dem keilförmigen Vorsprung in den Adapter bzw. der Blackbox (4) eintreten oder die Schmelzen für die Unterfolie(n) aus mindestens einer Eintrittsöffnung oder eines Spaltes, der unterhalb oder oberhalb der Öffnung für die Oberschicht (12) und unterhalb oder oberhalb des keilförmigen Vorsprunges (8) angeordnet ist, austreten und sich mit den Schmelzmassenströmen der unterschiedlich gefärbten Oberflächenbereiche und der Unterfolie vereinigen.

3. Verfahren nach Ansprüchen 1 und 2, dadurch gekennzeichnet, daß die aus der Breitschlitzextruderdüse austretende Folie oder schmelzenförmige Folie durch entsprechende Einstellung der Farbstoff- oder Farbpigmentkonzentrationen, der Auswahl der Farbstoffe und Farbpigmente und/oder durch unterschiedlich gefärbte Füllstoffe jeweils einen helleren und einem dunkleren Oberflächenbereich aufweisen und/oder die aus dem Extruder austretende Verbundfolie nachfolgend einer Weiterverarbeitung oder Behandlung unterworfen wird.

4. Verfahren nach einem oder mehreren der Ansprüche 1 bis 3, dadurch gekennzeichnet, daß die aus der Breitschlitzextruderdüse (5) austretenden Folien oder schmelzenförmigen Folien durch die entsprechende Steuerung der zugeführten Schmelzströme der Oberfolie oder Oberflächenschichten (12) einen breiteren helleren oder mit hellen Farbstoffen und/oder Farbpigmenten gefärbten Oberflächenbereich, den Armaturenbereich oder Bereich A, und einen kleineren dazu parallel oder annähernd parallel verlaufenden dunkleren oder mit dunkleren Farbstoffen und/oder Farbpigmenten versehenen Oberflächenbereich den an der Frontscheibe angrenzender Bereich oder Bereich F, aufweisen.

5. Verfahren nach einem oder mehreren der Ansprüche 1 bis 4, dadurch gekennzeichnet, daß der Druck der einzelnen Kunststoff- oder Extrudat-Massenströme, gemessen vor Eintritt in den Adapter, vorzugsweise der Druck der Masseströme für die Oberfolie (12), konstant oder annähernd konstant gehalten wird.

6. Verfahren nach einem oder mehreren der Ansprüche 1 bis 5, dadurch gekennzeichnet, daß durch die Form und Stellung des keilförmigen oder im Querschnitt dreieckförmigen Vorsprungs (8) und/oder durch die in dem Adapter oder der Blackbox (4) eintretenden Schmelzmassenströme die Bereiche A und F für die Oberfolie in ihrer Breite durch auswechselbare Einsatzteile (9) mit keilförmigen oder im Querschnitt dreieckförmigen Vorsprung (8) eingestellt werden, wobei jedoch das jeweilige Einsatzteil und der Vorsprung unter dem Einfluß des Druckes der Masseströme sich nicht verändert.

7. Verfahren nach einem oder mehreren der Ansprüche 1 bis 6, dadurch gekennzeichnet, daß die nach dem Verfahren hergestellten heißen Extrudatbahnen oder schmelzenförmigen Kunststoffbahnen anschließend einem Glättwalzwerk zugeführt werden, das mindestens 2 (6, 7), vorzugsweise mindestens 3 Glättwerkwalzen (6, 7, 7'), aufweist, wobei die Glättwerkwalze, die mit dem zwei- oder mehrfarbigen Kunststoffextrudat der Oberfolie (12) in Berührung kommt, um mehr als 30 °C, vorzugsweise mehr als 45 °C, wärmer eingestellt ist als die (obere) Glättwerkwalze, die mit der bzw. den Unterfolie(n) (11) in Berührung kommt.

8. Verfahren nach einem oder mehreren der Ansprüche 1 bis 7, dadurch gekennzeichnet, daß für die Oberfolienbereiche oder Oberflächenschichtbereiche A und F die gleichen Kunststoffe verwendet werden, jedoch unterschiedliche Farbstoffe und/oder Farbpigmente oder Farbstoff- und/oder Farbpigmentkonzentrationen eingesetzt werden und daß die Spitze des keilförmigen oder im Querschnitt dreieckförmigen Vorsprunges (8), der oberhalb der Spalte oder der Öffnung für die Schmelze der Unterfolie(n) oder Unterschicht(en) (11) angeordnet ist, auf den Spalt bzw. die Schmelzenöffnung für die Unterfolie (11) gerichtet wird, wobei die Spitze zu dem dunkler gefärbten Bereich F gerichtet ist oder wird, so daß ein breiterer Oberflächenschichtenbereich A und ein kleinerer Oberflächenbereich F bei der austretenden Folie eingestellt ist.

9. Verfahren nach einem oder mehreren der Ansprüche 1 bis 8, dadurch gekennzeichnet, daß der keilförmige Vorsprung zusammen mit den Spalten oder Öffnungen für die Schmelzen auf einem Element, Formteil oder Einsatzteil, vorzugsweise auf einer Scheibe, angeordnet wird und das Formteil, Element oder Einsatzteil vor dem Herstellungsverfahren in den Adapter oder in die Blackbox (4) eingesetzt, dort befestigt oder ausgewechselt wird.

10. Verfahren nach einem oder mehreren der Ansprüche 1 bis 9, dadurch gekennzeichnet, daß Massendrücke der unterschiedlich farbigen Extrudatströme, gemessen bei Austritt aus dem Extruder (1) bzw. Coextruder (2, 3), gleich oder annähernd gleich sind und sich um weniger als 45 bar voneinander unterscheiden, wobei die Massendrücke der unterschiedlichen Extrudatströme jedoch höher als 280 bar liegen und/oder daß die Massetemperaturen der unterschiedlich farbigen Extrudatströme, gemessen beim Austritt aus dem Extruder (1), sich um weniger als 15 °C voneinander unterscheiden, wobei die Massetemperatur der unterschiedlich farbigen Extrudatströme, gemessen bei dem Austritt aus dem Extruder, auf mehr als 210 °C eingestellt ist.

11. Verfahren nach einem oder mehreren der Ansprüche 1 bis 10, dadurch gekennzeichnet, daß der Massedruck der unterschiedlich farbigen Extrudatströme, gemessen beim Austritt aus dem Extruder, d. h. vor dem Adapter oder der Blackbox (4), 300 bis 450 bar, vorzugsweise 340 bis 440 bar, und die Massetemperatur, gemessen beim Austritt aus dem Extruder, 200 bis 250 °C, vorzugsweise 220 bis 245 °C, beträgt.

12. Verfahren nach einem oder mehreren der Ansprüche 1 bis 11, dadurch gekennzeichnet, daß für die einzsetzende Kunststoffzusammensetzung der Unterfolie(n) (11) mindestens ein Vernetzungsmittel, vorzugsweise ein polymeres Vernetzungsmittel, verwendet wird.

13. Vorrichtung zur Herstellung von zwei- oder mehrfarbigen Schalttafelfolien, Armaturenbrettfolien oder daraus hergestellten Armaturenbretter, enthaltend mindestens zwei Extruder(1 bzw. 2, 3), mindestens einen Adapter oder eine Blackbox (4), mindestens drei Öffnungen oder Zuführungsanschlüsse für die Kunststoffschmelzzuführung von dem jeweiligen Extruder sowie einer dem Adapter nachgeschalteten Breitschlitzextruderdüse (5) (Düsenblock), dadurch gekennzeichnet, daß mindestens zwei der in dem Adapter angebrachten Öffnungen beidseitig neben einem keilförmigen oder im Querschnitt dreieckförmigen Vorsprung (8) angeordnet sind und mindestens eine weitere Eintrittsöffnung oder einen Eintrittsschlitz für mindestens eine Unterschicht unterhalb der beidseitig angeordneten Öffnungen angebracht ist, wobei die Spitze des keilförmigen oder im Querschnitt dreieckförmigen Vorsprunges (8), der oberhalb der Spalte oder der Öffnung für die Schmelze der Unterfolie(n) oder Unterschicht(en) (11) angeordnet ist, auf den Spalt bzw. die Schmelzenöffnung für die Unterfolie gerichtet ist.

14. Vorrichtung nach Anspruch 13, dadurch gekennzeichnet, daß der keilförmige Vorsprung (8) auf einem in den Adapter oder in die Blackbox einsetzbaren oder befestigbaren Element, Formteil oder Einsatzteil (9), vorzugsweise auf einer Scheibe, angeordnet ist, wobei jedoch das jeweilige Element , Formteil oder Einsatzteil, vorzugsweise die Scheibe, und der Vorsprung aus starrem Material, vorzugsweise Metall, bestehen und sich unter dem Einfluß der Massenströme sich nicht verändern oder verformen..

15. Vorrichtung nach einem oder mehereren der Ansprüche 13 bis 14, dadurch gekennzeichnet, daß der keilförmige oder im Querschnitt dreieckförmige Vorsprung mit dem Spalt oder der Schmelzenöffnung für die Unterfolie (11) einen Winkel unter 90°, für einen Farbbereich, und einen Winkel über 90° und unter 160°, vorzugsweise unter 150°, für den anderen Farbbereich, bildet.

16. Vorrichtung nach einem oder mehreren der Ansprüche 13 bis 15, dadurch gekennzeichnet, daß der Vorrichtung ein Glättwalzwerk mit mindestens zwei Walzen (6, 7) bzw. (6, 7, 7') nachgeordnet ist.

17. Verwendung der nach dem Verfahren hergestellten Folien, bestehend aus mindestens einer Trägerschicht oder Trägerfolie oder -schicht, mindestens einer darauf angeordneten Farbstoffe und/oder Farbpigmente enthaltenden Oberfolie oder Oberschicht (12) sowie gegebenenfalls einer oder mehreren weiteren Schicht(en) oder Folie(n), wobei die Oberfolie oder Oberschicht (12) aus mindestens zwei parallel oder annähernd parallel verlaufenden, in der Aufsicht rechteckig- oder parallelogrammförmigen verschiedenartig gefärbten oder pigmentierten Zonen oder Abschnitten besteht und die verschiedenfarbige(n) Oberfolie(n) oder Oberschicht(en) zusammen mit mindestens einer Unterfolie oder Unterschicht (11) durch Coextrusion oder Mehrfachextrusion als Verbundfolie hergestellt ist, zur Herstellung von Armaturenbrettern innerhalb eines Tiefziehvorganges.

## Claims

1. A method for manufacturing two-coloured or multicoloured sheets (10) using a backing sheet or backing layer (11), having at least one upper sheet or upper layer (12) located thereon which contains dyes and/or coloured pigments, wherein the plastics melts for these sheets or layers which come from two or more extruders (1) are separated or partially separated before emerging from the die by at least one projection which is wedge-shaped or is triangular in cross-section, but thereafter are guided next to one another and/or over one another and the differently coloured melts of the upper sheet (12) combine with the melt layer of the lower sheet or lower layer before emerging from the extruder die, characterised in that the plastics melts are supplied continuously to an adapter or a black box (4) having at least one opening or a gap for the backing sheet or backing layer (11) and at least one additional opening for the upper sheet or upper layer (12), with an adapter or a black box (4) being used in which the wedge-shaped projection (8) or the projection which is triangular in cross-section is arranged, the tip of the wedge-shaped projection (8) pointing to the gap or gaps for the lower sheet, that at least two differently coloured plastics materials, in melt form, for the upper sheet or upper layer (12), which have the same viscosity or virtually the same viscosity, a difference in the MFI at 230°C/2.16 kg of 0 to 0.5 g/10 min, after passing through the adapter or the black box (4) without using a bar separating the two melts are guided next to one another and/or over one another, that the melt pressures of the differently coloured extrudate streams, measured upon emergence from the extruder (1) or coextruder (2) (3), are the same or approximately the same and differ by less than 60 bar, the melt pressures of the different extrudate streams however being greater than 250 bar and that the sheets thus manufactured (10) are used as control panel sheets, dashboard sheets or dashboards made therefrom.

2. A method according to Claim 1, characterised in that the melt temperatures of the differently coloured extrudate streams, measured upon emergence from the extruder, differ by less than 30°C from each other, the melt temperature of the differently coloured extrudate streams, measured upon emergence from the extruder, being set to more than 190°C, that the melts for the upper sheet or upper layer (12) which have different dye contents and/or coloured pigment contents enter the adapter or the black box (4) on either side next to the wedge-shaped projection, or the melts for the lower sheet(s) emerge from at least one entry opening or one gap which is located below or above the opening for the upper layer (12) and below or above the wedge-shaped projection (8), and combine with the melt streams of the differently coloured surface regions and the lower sheet.

3. A method according to Claims 1 and 2, characterised in that the sheets or sheets in melt form emerging from the slot extruder die owing to appropriate adjustment of the dye or coloured pigment concentrations, the selection of dyes and coloured pigments and/or owing to differently coloured fillers each time have a lighter and a darker surface region and/or the composite sheet emerging from the extruder is subsequently subjected to further processing or treatment.

4. A method according to one or more of Claims 1 to 3, characterized in that the sheets or sheets in melt form emerging from the slot extruder die (5), owing to appropriate control of the melt streams for the upper sheet or surface layers (12) which are supplied, have a broader, lighter surface region or a surface region coloured with light dyes and/or coloured pigments, the fittings region or region A, and a smaller darker surface region or a surface region provided with darker dyes and/or coloured pigments extending parallel or approximately parallel thereto, the region adjoining the windscreen, or region F.

5. A method according to one or more of Claims 1 to 4, characterised in that the pressure of the individual plastics or extrudate melt streams, measured before entry into the adapter, preferably the pressure of the melt streams for the upper sheet (12), is kept constant or approximately constant.

6. A method according to one or more of Claims 1 to 5, characterised in that owing to the form and position of the projection (8) which is wedge-shaped or is triangular in cross-section and/or owing to the melt streams entering the adapter or the black box (4), the width of the regions A and F for the upper sheet is adjusted by exchangeable inserts (9) having a projection (8) which is wedge-shaped or is triangular in cross-section, but the respective insert and the projection do not change under the influence of the pressure of the melt streams.

7. A method according to one or more of Claims 1 to 6, characterised in that the hot extrudate webs or melt-like plastics webs manufactured according to the method are then fed to a polishing mill which has at least 2 (6, 7), preferably at least 3 (6, 7, 7'), polishing rolls, the polishing roll which comes into contact with the two-coloured or multi-coloured plastics extrudate of the upper sheet (12) being set to be more than 30°C, preferably more than 45°C, warmer than the (upper) polishing roll which comes into contact with the lower sheet(s) (11).

8. A method according to one or more of Claims 1 to 7, characterised in that the same plastics materials are used for the upper sheet regions or surface layer regions A and F, but different dyes and/or coloured pigments or dye and/or coloured pigment concentrations are used and that the tip of the projection (8) which is wedge-shaped or is triangular in cross-section and which is located above the gap or the opening for the melt of the lower sheet(s) or lower layer(s) (11) is directed at the gap or the melt opening for the lower sheet (11), the tip being directed at the darker-coloured region F, so that a wider surface layer region A and a smaller surface region F is set in the emerging sheet.

9. A method according to one or more of Claims 1 to 8, characterised in that the wedge-shaped projection together with the gaps or openings for the melts is located on an element, shaped part or insert part, preferably on a disc, and the shaped part, element or insert part is inserted into the adapter or into the black box (4), is fastened therein or is exchanged before the manufacturing process.

10. A method according to one or more of Claims 1 to 9, characterised in that melt pressures of the differently coloured extrudate streams, measured upon emergence from the extruder (1) or coextruder (2, 3), are the same or approximately the same, and differ from each other by less than 45 bar, the melt pressures of the different extrudate streams however being greater than 280 bar and/or that the melt temperatures of the differently coloured extrudate streams, measured upon emergence from the extruder (1), differ from each other by less than 15°C, the melt temperature of the differently coloured extrudate streams, measured upon emergence from the extruder, being set to more than 210°C.

11. A method according to one or more of Claims 1 to 10, characterised in that the melt pressure of the differently coloured extrudate streams, measured upon emergence from the extruder, i.e. before the adapter or the black box (4), is 300 to 450 bar, preferably 340 to 440 bar, and the melt temperature, measured upon emergence from the extruder, is 200 to 250°C, preferably 220 to 245°C.

12. A method according to one or more of Claims 1 to 11, characterised in that at least one cross-linking agent, preferably a polymeric cross-linking agent, is used for the plastics composition of the lower sheet(s) (11) which is to be used.

13. An apparatus for manufacturing two-coloured or multicoloured control-panel sheets, dashboard sheets or dashboards manufactured therefrom, comprising at least two extruders (1 and/or 2, 3), at least one adapter or a black box (4), at least three openings or supply connections for supplying the plastics melt from the respective extruder and a slot extruder die (5) (die block) succeeding the adapter, characterized in that at least two of the openings made in the adapter are arranged on both sides next to a projection (8) which is wedge-shaped or is triangular in cross-section and at least one additional entry opening or an entry slot for at least one lower layer is provided beneath the openings arranged on both sides, the tip of the cross-section (8) which is wedge-shaped or is triangular in cross-section, which is located above the gaps or the opening for the melt of the lower sheet(s) or lower layer(s) (11) is directed at the gap or the melt opening for the lower sheet.

14. An apparatus according to Claim 13, characterised in that the wedge-shaped projection (8) is located on an element, shaped part or insert part (9), preferably on a disc, which can be inserted or fastened into the adapter or into the black box, but the respective element, shaped part or insert part, preferably the disc, and the projection are made of rigid material, preferably metal, and do not change or deform under the influence of the melt streams.

15. An apparatus according to one or more of Claims 13 or 14, characterised in that the projection which is wedge-shaped or is triangular in cross-section forms with the gap or the melt opening for the lower film (11) an angle of less than 90° for one coloured region and an angle of more than 90° and less than 160°, preferably less than 150°, for the other region.

16. An apparatus according to one or more of Claims 13 to 15, characterised in that the apparatus is succeeded by a polish-rolling mill which has at least two rolls (6, 7) or (6, 7, 7').

17. The use of the sheets manufactured according to the method, consisting of at least one backing layer or backing sheet or layer, at least one upper sheet or upper layer (12) located thereon and containing dyes and/or coloured pigments, and also optionally one or more additional layer(s) or sheet(s), the upper sheet or upper layer (12) consisting of at least two parallel or approximately parallel, differently coloured or pigmented zone or sections which are rectangular or parallelogram-shaped in plan view and the differently coloured upper sheet(s) or upper layer(s) together with at least one lower sheet or lower layer (11) is/are manufactured by coextrusion or multiple extrusion as a composite sheet, for the manufacture of dashboards within a negative thermoforming operation.

## Revendications

1. Procédé pour la fabrication de feuilles bicolores ou multicolores (10) en utilisant une feuille de support ou une couche de support (11) sur laquelle est disposée au moins une feuille supérieure ou une couche supérieure (12) contenant des colorants et/ou des pigments colorés, dans lequel les matières synthétiques en fusion pour ces feuilles ou pour ces couches, provenant de deux extrudeuses (1) ou plus, sont séparées ou sont séparées en partie avant leur sortie de la filière par au moins une saillie cunéiforme ou de section transversale triangulaire, mais sont guidées par la suite les unes à côté des autres et/ou les unes par-dessus les autres, et les masses fondues de couleurs différentes de la feuille supérieure (12) se combinent avec la couche en fusion de la feuille inférieure ou de la couche inférieure avant leur sortie de la filière de l'extrudeuse, caractérisé en ce que les matières synthétiques en fusion sont acheminées en continu à un adaptateur ou à une boîte noire (blackbox) (4) comportant au moins une ouverture ou une fente pour la feuille ou couche de support (11) et au moins une ouverture supplémentaire pour la feuille supérieure ou pour la couche supérieure (12), dans lequel on utilise un adaptateur ou une boîte noire (4) dans lequel, respectivement dans laquelle est disposée la saillie cunéiforme (8) ou la saillie en section transversale triangulaire, la pointe de la saillie cunéiforme (8) étant orientée vers la fente ou vers les fentes pour la feuille inférieure; en ce qu'au moins deux matières synthétiques en fusion de couleurs différentes pour la feuille supérieure ou pour la couche supérieure (12) qui présentent une viscosité identique ou une viscosité pratiquement identique, différence quant à la valeur MFI à 230°C/2,16 kg de 0 à 0,5 g/10 min, sont guidées l'une à côté de l'autre et/ou l'une par-dessus l'autre après leur passage par l'adaptateur ou par la boîte noire (4) sans utiliser une traverse séparant les deux masses fondues; en ce que les pressions massiques des courants d'extrudats de couleurs différentes, mesurées à la sortie de l'extrudeuse (1), respectivement des coextrudeuses (2, 3), sont identiques ou approximativement identiques et se distinguent l'une de l'autre à concurrence de moins de 60 bar, les pressions massiques des différents courants d'extrudats étant néanmoins supérieures à 250 bar; et en ce que les feuilles (10) ainsi fabriquées sont utilisées à titre de feuilles pour des tableaux de distribution, à titre de feuilles pour des tableaux de bord ou encore à titre de tableaux de bord préparés à partir de ces dernières.

2. Procédé selon la revendication 1, caractérisé en ce que les températures massiques des courants d'extrudats de couleurs différentes, mesurées à la sortie de l'extrudeuse, se distinguent l'une de l'autre à concurrence de moins de 30°C, la température massique des courants d'extrudats de couleurs différentes mesurée à la sortie de l'extrudeuse étant réglée à une valeur supérieure à 190°C; en ce que les masses fondues présentant différentes teneurs en colorants et/ou différentes teneurs en pigments colorés, pour la feuille supérieure ou pour la couche supérieure (12), pénètrent de part et d'autre de la saillie cunéiforme dans l'adaptateur, respectivement dans la boîte noire (4), ou bien les masses fondues pour la ou les feuilles inférieures sortent par au moins une ouverture d'entrée ou une fente qui est disposée en dessous ou au-dessus de l'ouverture pour la couche supérieure (12) et en dessous ou au-dessus de la saillie cunéiforme (8), et se combinent avec les courants massiques en fusion des zones superficielles différemment colorées et de la feuille inférieure.

3. Procédé selon les revendications 1 et 2, caractérisé en ce que la feuille ou la feuille en fusion quittant la filière de l'extrudeuse à fente large, via un réglage correspondant des concentrations du colorant ou du pigment coloré, par le choix des colorants et des pigments colorés et/ou grâce à des matières de charge différemment colorées, présente respectivement une zone superficielle plus claire et une zone superficielle plus sombre, et/ou la feuille composite quittant l'extrudeuse est soumise par la suite à un traitement ultérieur ou à une manipulation.

4. Procédé selon une ou plusieurs des revendications 1 à 3, caractérisé en ce que les feuilles ou les feuilles en fusion quittant la filière (5) de l'extrudeuse à fente large, grâce au réglage correspondant des courants en fusion acheminés de la feuille supérieure ou des couches superficielles (12), présentent une zone superficielle plus large et plus claire ou colorée avec des colorants clairs et/ou des pigments de couleur claire, la zone correspondant au tableau de bord ou zone A, une zone superficielle plus petite s'étendant parallèlement ou de manière approximativement parallèle à cette dernière, plus sombre ou munie de colorants plus sombres et/ou de pigments de couleur plus sombre, la zone contiguë au parc-brise ou zone F.

5. Procédé selon une ou plusieurs des revendications 1 à 4, caractérisé en ce qu'on maintient constante ou approximativement constante la pression des courants massiques individuels de la matière synthétique ou de l'extrudat, mesurée avant leur entrée dans l'adaptateur, de préférence la pression des courants massiques pour la feuille supérieure (12).

6. Procédé selon une ou plusieurs des revendications 1 à 5, caractérisé en ce que, par la forme et par la position de la saillie cunéiforme ou de section transversale triangulaire (8) et/ou via les courants massiques en fusion pénétrant dans l'adaptateur ou dans la boîte noire (4), on règle les zones A et F pour la feuille supérieure quant à leur largeur en utilisant des pièces d'insertion échangeables (9) munies d'une saillie cunéiforme ou de section transversale triangulaire (8), dans lequel néanmoins la pièce d'insertion respective et la saillie ne se modifient pas sous l'influence de la pression des courants massiques.

7. Procédé selon une ou plusieurs des revendications 1 à 6, caractérisé en ce qu'on achemine ensuite les bandes d'extrudat chaudes ou les bandes de matière synthétique en fusion fabriquées conformément au procédé à un mécanisme équipé de rouleaux lisseurs, qui présente au moins deux rouleaux lisseurs (6, 7), de préférence au moins trois rouleaux lisseurs (6, 7, 7'), les rouleaux lisseurs qui entrent en contact avec l'extrudat de matière synthétique bicolore ou multicolore de la feuille supérieure (12) sont réglés à une température telle qu'ils sont plus chauds à concurrence de plus de 30°C, de préférence de plus de 45°C que le rouleau lisseur (supérieur) qui entre en contact avec la, respectivement les feuilles inférieures (11).

8. Procédé selon une ou plusieurs des revendications 1 à 7, caractérisé en ce qu'on utilise les mêmes matières synthétiques pour les zones de feuilles supérieures ou pour les zones de couches superficielles A et F tout en mettant néanmoins en oeuvre des colorants et/ou des pigments colorés différents ou encore des concentrations différentes de colorants et/ou de pigments colorés, et en ce que la pointe de la saillie cunéiforme ou de section transversale triangulaire (8), qui est disposée au-dessus de la fente ou de l'ouverture pour la masse fondue de la ou des feuilles inférieures ou de la ou des couches inférieures (11), est orientée vers la fente, respectivement vers l'ouverture destinée à la masse fondue de la feuille inférieure (11), la pointe ayant été ou étant orientée en direction de la zone F de couleur plus sombre, si bien que l'on règle une zone de couche superficielle plus large A et une zone superficielle plus petite F dans la feuille qui sort.

9. Procédé selon une ou plusieurs des revendications 1 à 8, caractérisé en ce que la saillie cunéiforme est disposée de manière conjointe avec les fentes ou les ouvertures pour les masses fondues, sur un élément, sur un élément moulé ou sur une pièce d'insertion, de préférence sur un disque, l'élément moulé, l'élément ou la pièce d'insertion étant introduit dans l'adaptateur ou dans la boîte noire (4), fixé dans ce dernier ou échangé, avant le procédé de fabrication.

10. Procédé selon une ou plusieurs des revendications 1 à 9, caractérisé en ce que les pressions massiques des courants d'extrudats de couleurs différentes, mesurées à la sortie de l'extrudeuse (1), respectivement des coextrudeuses (2, 3) sont identiques ou approximativement identiques et se distinguent l'une de l'autre à concurrence de moins de 45 bar, les pressions massiques des différents courants d'extrudats étant néanmoins supérieures à 280 bar, et/ou en ce que les températures massiques des courants d'extrudats de couleurs différentes mesurées à la sortie de l'extrudeuse (1) se distinguent l'une de l'autre à concurrence de moins de 15°C, la température massique des courants d'extrudats de couleurs différentes mesurée à la sortie de l'extrudeuse étant réglée à une valeur supérieure à 210°C.

11. Procédé selon une ou plusieurs des revendications 1 à 10, caractérisé en ce que la pression massique des courants d'extrudats de couleurs différentes, mesurée à la sortie de l'extrudeuse, c'est-à-dire avant l'adaptateur ou avant la boîte noire (4), s'élève de 300 à 450 bar, de préférence de 340 à 440 bar, et la température massique mesurée à la sortie de l'extrudeuse s'élève de 200 à 250°C, de préférence de 220 à 245°C.

12. Procédé selon une ou plusieurs des revendications 1 à 11, caractérisé en ce qu'on utilise, pour la composition de matière synthétique à mettre en oeuvre pour la ou les feuilles inférieures (11), au moins un agent de réticulation, de préférence un agent de réticulation polymère.

13. Dispositif pour la fabrication de feuilles bicolores ou multicolores pour des tableaux de distribution, de feuilles bicolores ou multicolores pour des tableaux de bord ou encore de tableaux de bord fabriqués à partir de ces dernières, contenant au moins deux extrudeuses (1, respectivement 2, 3), au moins un adaptateur ou une boîte noire (4), au moins trois ouvertures ou trois raccords d'admission pour l'acheminement de la matière synthétique en fusion depuis l'extrudeuse respective, ainsi qu'une filière d'extrudeuse à fente large (5) (bloc de filière) montée en aval de l'adaptateur, caractérisé en ce qu'au moins deux des ouvertures pratiquées dans l'adaptateur sont disposées de part et d'autre d'une saillie cunéiforme ou de section transversale triangulaire (8) et au moins une ouverture d'entrée ou une fente d'entrée supplémentaire pour au moins une couche inférieure est pratiquée en dessous des ouvertures disposées de part et d'autre, la pointe de la saillie cunéiforme ou de section transversale triangulaire (8) qui est disposée au-dessus de la fente ou de l'ouverture pour la masse fondue de la ou des feuilles inférieures ou de la ou des couches inférieures (11) étant orientée en direction de la fente, respectivement de l'ouverture de la masse fondue pour la feuille inférieure.

14. Dispositif selon la revendication 13, caractérisé en ce que la saillie cunéiforme (8) est disposée sur un élément, sur un élément moulé ou sur une pièce d'insertion (9), de préférence sur un disque qui peut être inséré ou fixé dans l'adaptateur ou dans la boîte noire, dans lequel toutefois l'élément respectif, l'élément moulé respectif ou la pièce d'insertion respective, de préférence le disque respectif, ainsi que la saillie sont constitués d'une matière rigide, de préférence de métal, et ne se modifient ou ne se déforment pas sous l'influence des courants massiques.

15. Dispositif selon une ou plusieurs des revendications 13 à 14, caractérisé en ce que la saillie cunéiforme ou de section transversale triangulaire forme avec la fente ou avec l'ouverture pour la masse fondue de la feuille inférieure (11) un angle inférieur à 90° pour une zone de couleur et un angle supérieur à 90° et inférieur à 160°, de préférence inférieur à 150° pour l'autre zone de couleur.

16. Dispositif selon une ou plusieurs des revendications 13 à 15, caractérisé en ce qu'un mécanisme équipé de rouleaux lisseurs comprenant au moins deux rouleaux (6, 7, respectivement 6, 7, 7') est monté en aval du dispositif.

17. Utilisation des feuilles fabriquées conformément au procédé, constituées par au moins une couche de support ou par au moins une feuille de support, par au moins une feuille supérieure ou une couche supérieure (12) disposée par-dessus la première citée et contenant des colorants et/ou des pigments colorés, ainsi que, le cas échéant, par une ou plusieurs autres couches ou feuilles, dans laquelle la feuille supérieure ou la couche supérieure (12) est constituée par au moins deux zones ou deux sections s'étendant en parallèle ou de manière approximativement parallèle, différemment colorées ou pigmentées, et dont la vue en plan présente la forme d'un rectangle ou d'un parallélogramme, la ou les feuilles supérieures ou la ou les couches supérieures de couleurs différentes étant fabriquées sous la forme d'une feuille composite de manière conjointe avec au moins une feuille inférieure ou une couche inférieure (11) par coextrusion ou par extrusion multiple, pour la fabrication de tableaux de bord dans le cadre d'un processus d'emboutissage.
